# EUROPÄISCHE PATENTSCHRIFT

(11) **EP 2 790 976 B1**
(45) Veröffentlichungstag und Bekanntmachung des Hinweises auf die Patenterteilung: **27.05.2020**
(21) Anmeldenummer: 12809237.6
(22) Anmeldetag: 17.12.2012
(51) Int. Cl.: B60S 1/38

(54) **WISCHVORRICHTUNG MIT ZUMINDEST ZWEI, DURCH EINE SCHRUMPFVERBINDUNG VERBUNDENEN WISCHBLATTEINHEITEN**
WIPER DEVICE WITH AT LEAST TWO WIPER BLADE UNITS WHICH ARE CONNECTED BY A SHRINK FIT CONNECTION
DISPOSITIF ESSUIE-GLACE COMPORTANT AU MOINS DEUX UNITÉS D'ESSUIE-GLACE RELIÉES PAR UNE LIAISON FORMANT CHAUSSON

(30) Priorität: 16.12.2011 DE 102011088871
(43) Veröffentlichungstag der Anmeldung: 22.10.2014
(73) Patentinhaber: Robert Bosch GmbH, 70442 Stuttgart (DE)
(72) Erfinder: DEPONDT, Helmut, 3010 Kessel-Lo (BE)
(86) Internationale Anmeldenummer: PCT/EP2012/075694
(87) Internationale Veröffentlichungsnummer: WO 2013/087915

(56) Entgegenhaltungen:
- EP-A1- 1 914 463
- EP-A1- 2 042 394
- EP-A1- 2 236 366
- DE-A1- 3 021 346
- DE-A1- 10 305 323
- DE-A1- 19 616 957
- DE-A1-102007 012 700
- DE-U1- 20 220 355
- US-A1- 2009 158 545

## Beschreibung

### Stand der Technik

Es ist bereits eine Wischvorrichtung mit einer ersten Wischblatteinheit und zumindest einer zweiten Wischblatteinheit vorgeschlagen worden.

Ein gattungsgemäßes Wischblatt ist aus der DE 103 05 323 A1 bekannt. Als weiterer Stand der Technik ist die EP 2 042 394 A1, die DE 30 21 346 A1, die DE 196 16 957 A1 und die EP 1 914 463 A1 bekannt.

### Offenbarung der Erfindung

Die Erfindung geht aus von einer Wischvorrichtung mit einer ersten Wischblatteinheit und zumindest einer zweiten Wischblatteinheit.

Es wird vorgeschlagen, dass die erste und die zweite Wischblatteinheit über eine Schrumpf- und/oder Ausdehnverbindung verbunden sind. Dadurch kann insbesondere die Wischvorrichtung besonders einfach ausgestaltet werden, und insbesondere können die zwei Wischblatteinheiten einfach und kostengünstig fest miteinander verbunden werden. Unter einer "Wischblatteinheit" soll insbesondere ein Bauteil eines Wischblatts verstanden werden, wobei ein Wischblatt mehrere miteinander verbundene Wischblatteinheiten aufweist. Unter einer "Schrumpf- und/oder Ausdehnverbindung" soll insbesondere eine feste Verbindung zwischen zwei Bauteilen, insbesondere den beiden Wischblatteinheiten, verstanden werden, die durch eine Größenänderung zumindest eines der beiden Bauteile, vorteilhafterweise durch eine thermische Einwirkung auf das entsprechende Bauteil, entsteht, wobei eines der beiden Bauteile infolge der Größenänderung das andere Bauteil umschließt oder sich gegen das andere Bauteil verspannt. Dabei soll unter einer "Schrumpf- und/oder Ausdehnverbindung" eine Verbindung verstanden werden, die nicht allein durch eine elastische Verformung zumindest eines der entsprechenden Bauteile bedingt ist.

Des Weiteren wird vorgeschlagen, dass die erste Wischblatteinheit als ein Zweikomponentenbauteil ausgebildet ist. Dadurch kann die Wischblatteinheit besonders vorteilhaft ausgebildet werden. Unter einem "Zweikomponentenbauteil" soll insbesondere ein Bauteil verstanden werden, das aus zwei unterschiedlichen Materialien, insbesondere unterschiedlichen Kunststoffen, aufgebaut ist, die unterschiedliche Stoffeigenschaften aufweisen können und in einem Fertigungsverfahren, insbesondere einem Zweikomponentenspritzverfahren, fest miteinander verbunden werden.

Erfindungsgemäß weist die Wischblatteinheit einen Aufnahmebereich auf, der eine größere Steifigkeit aufweist als ein Wischlippenbereich der Wischblatteinheit. Dadurch kann die Wischblatteinheit besonders vorteilhaft ausgebildet werden und besonders vorteilhaft mit der zweiten Wischblatteinheit verbunden werden.

Erfindungsgemäß ist die erste Wischblatteinheit als ein Wischgummi ausgebildet. Dadurch kann die als Wischgummi ausgebildete Wischblatteinheit besonders vorteilhaft ausgebildet werden. Unter einem "Wischgummi" soll insbesondere ein Bauteil des Wischblatts verstanden werden, das aus einem Kunststoff besteht und in einem Betriebszustand der Wischvorrichtung auf einer zu wischenden Kraftfahrzeugscheibe aufliegt und diese wischt. Dabei weist der Wischgummi einen Wischbereich, mit dem er in zumindest einem Bereich mit der Kraftfahrzeugscheibe in Kontakt ist, und einen Aufnahmebereich auf, der zur Befestigung des Wischgummis an einem Rest der Wischvorrichtung vorgesehen ist.

Erfindungsgemäß ist die zweite Wischblatteinheit als eine Federschiene ausgebildet. Dadurch können die Wischblatteinheiten der Wischvorrichtung besonders vorteilhaft mittels der Schrumpfverbindung verbunden werden. Unter einer "Federschiene" soll insbesondere ein länglich ausgebildetes Bauteil aus einem federelastischen Material, vorteilhafterweise einem Metall, verstanden werden, das dazu vorgesehen ist, eine Federkraft bereitzustellen, die in einem Betriebszustand dazu vorgesehen ist, den Wischgummi mit seinem Wischbereich gegen eine gewölbte Kraftfahrzeugscheibe zu pressen, sodass eine möglichst vollständige Auflage des Wischgummis auf der Kraftfahrzeugscheibe erreicht wird.

Ferner wird vorgeschlagen, dass die als Federschiene ausgebildete zweite Wischblatteinheit in Längsrichtung in die als Wischgummi ausgebildete erste Wischblatteinheit eingeschoben ist. Dadurch können die Wischblatteinheiten besonders einfach mittels eines Schrumpfverfahrens miteinander verbunden werden.

Erfindungsgemäß ist die Schrumpf- und/oder Ausdehnverbindung durch eine Wärmebehandlung hergestellt. Dadurch kann die Schrumpf- und/oder Ausdehnverbindung besonders einfach hergestellt werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Beschreibung des Ausführungsbeispiels

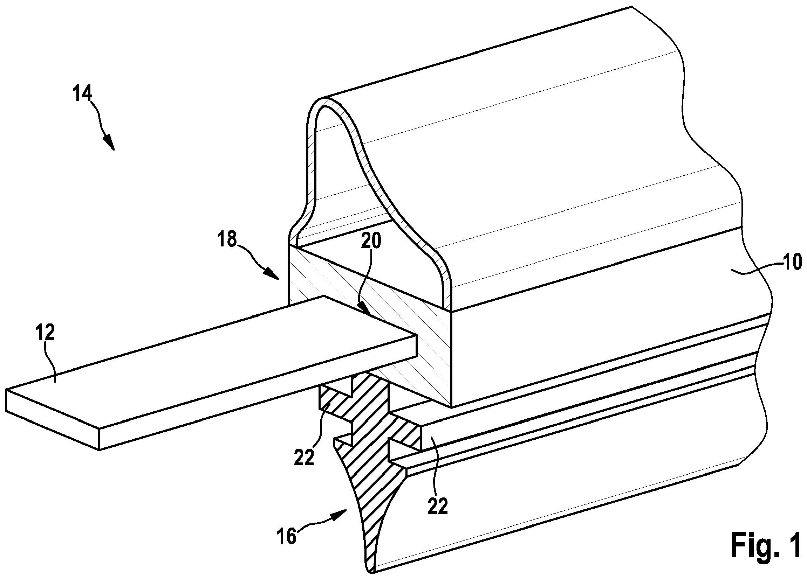

Figur 1 zeigt eine schematische Schnittdarstellung einer erfindungsgemäßen Wischvorrichtung. Die Wischvorrichtung ist Teil eines nicht näher dargestellten Wischsystems, das in einem Betriebszustand dazu vorgesehen ist, eine gewölbte Kraftfahrzeugscheibe eines Kraftfahrzeugs zu wischen. Dazu umfasst das Wischsystem einen nicht näher dargestellten Wischarm, der an einem ersten Ende fest mit einem nicht näher dargestellten Wischermotor verbunden ist, der zur Erzeugung einer Schwenkbewegung des Wischarms vorgesehen ist. Das Wischsystem umfasst einen Wischarmadapter, der fest mit dem Wischarm verbunden ist, wobei es grundsätzlich auch denkbar ist, dass der Wischarm einstückig mit dem Wischarmadapter ausgebildet ist. Die Wischvorrichtung umfasst weiter ein teilweise dargestelltes Wischblatt 14 und einen fest mit dem Wischblatt 14 verbundenen, nicht näher dargestellten Wischblattadapter. Der Wischblattadapter ist für eine Montage des Wischblatts 14 an dem Wischarm fest und verliersicher mit dem Wischarmadapter verbindbar.

Die Wischvorrichtung weist eine erste Wischblatteinheit 10 und eine zweite Wischblatteinheit 12 auf, die das Wischblatt 14 zumindest teilweise ausbilden. Die Wischvorrichtung umfasst dabei weitere, nicht näher dargestellte Wischblatteinheiten, die zur Bildung des Wischblatts 14 mit den Wischblatteinheiten 10, 12 zusammen montiert werden.

Die erste Wischblatteinheit 10 ist als ein Wischgummi ausgebildet. Die erste, als Wischgummi ausgebildete Wischblatteinheit 10 weist eine längliche Ausdehnung auf, die entlang einer Haupterstreckungsrichtung des gesamten Wischblatts 14 orientiert ist. Die als Wischgummi ausgebildete Wischblatteinheit 10 weist einen Wischlippenbereich 16 auf. Mit dem Wischlippenbereich 16 liegt die als Wischgummi ausgebildete Wischblatteinheit 10 in einem voll montierten Zustand an der gewölbten Kraftfahrzeugscheibe an. Der Wischlippenbereich 16 ist pfeilförmig ausgebildet, wobei ein spitz zulaufendes Ende des Wischlippenbereichs 16 in montiertem Zustand der Kraftfahrzeugscheibe zugewandt ist und auf dieser aufliegt. Der Wischlippenbereich 16 der als Wischgummi ausgebildeten Wischblatteinheit 10 weist an einem dem spitz zulaufenden Ende abgewandten Seite zwei seitliche Stege 22 auf, die während eines Wischvorgangs ebenfalls auf der Kraftfahrzeugscheibe anliegen können, um die Kraftfahrzeugscheibe effektiver zu wischen. Grundsätzlich ist es auch denkbar, dass der Wischlippenbereich 16 anders ausgestaltet ist und beispielsweise keine oder mehr als zwei seitliche Stege 22 aufweist.

Die erste, als Wischgummi ausgebildete Wischblatteinheit 10 weist weiter einen Aufnahmebereich 18 auf. Der Aufnahmebereich 18 ist an einem der Kraftfahrzeugscheibe in montiertem Zustand abgewandten Seite des Wischlippenbereichs 16 angeordnet. Der Wischlippenbereich 16 und der Aufnahmebereich 18 sind einstückig miteinander ausgebildet und dadurch fest miteinander verbunden. Der Aufnahmebereich 18 der als Wischgummi ausgebildeten Wischblatteinheit 10 umfasst eine entlang der länglichen Ausdehnung der als Wischgummi ausgebildeten Wischblatteinheit 10 orientierte Ausnehmung 20, die von einem vorderen Ende bis zu einem hinteren Ende der als Wischgummi ausgebildeten Wischblatteinheit 10 reicht. Die Ausnehmung 20 ist dazu vorgesehen, in einem montierten Zustand die zweite Wischblatteinheit 12 aufzunehmen.

Die als Wischgummi ausgebildete erste Wischblatteinheit 10 ist als ein Zweikomponentenbauteil ausgebildet. Dabei besteht der Wischlippenbereich 16 aus einem anderen Material als der Aufnahmebereich 18 der als Wischgummi ausgebildeten Wischblatteinheit 10. Sowohl der Aufnahmebereich 18 als auch der Wischlippenbereich 16 sind dabei aus einem Kunststoff hergestellt. Die als Wischgummi ausgebildete Wischblatteinheit 10 wird in einem Zweikomponentenspritzverfahren hergestellt, wobei der Aufnahmebereich 18 und der Wischlippenbereich 16 der als Wischgummi ausgebildeten Wischblatteinheit 10 zusammen ausgebildet werden und dadurch fest miteinander verbunden sind. Die unterschiedlichen Kunststoffe des Wischlippenbereichs 16 und des Aufnahmebereichs 18 der als Wischgummi ausgebildeten Wischblatteinheit 10 weisen unterschiedliche Materialeigenschaften auf. Der Aufnahmebereich 18 weist eine größer Steifigkeit auf als der Wischlippenbereich 16.

Die erste Wischblatteinheit 10 und die zweite Wischblatteinheit 12 sind über eine Schrumpfverbindung miteinander verbunden. Die Schrumpfverbindung wird dabei durch eine Wärmebehandlung hergestellt. Dazu wird die als Federschiene ausgebildete zweite Wischblatteinheit 12 während eines Herstellungsverfahrens des Wischblatts 14 in Längsrichtung in die als Wischgummi ausgebildete erste Wischblatteinheit 10 eingeschoben. Der Aufnahmebereich 18 wird, wenn die als Federschiene ausgebildete Wischblatteinheit 12 korrekt in die Ausnehmung 20 eingebracht ist, mittels eines geeigneten, dem Fachmann als sinnvoll erscheinenden Verfahrens erhitzt. Durch die Wärmeeinwirkung schrumpft der Aufnahmebereich 18 zusammen. Die Ausnehmung 20, die in den Aufnahmebereich 18 eingebracht ist, verkleinert sich durch das Schrumpfen des Aufnahmebereichs 18. Die als Federschiene ausgebildete Wischblatteinheit 12 schrumpft hingegen nicht. Durch die Verkleinerung der Ausnehmung 20, in der die als Federschiene ausgebildete Wischblatteinheit 12 angeordnet ist, wird die als Federschiene ausgebildete Wischblatteinheit 12 in dem Aufnahmebereich 18 eingeklemmt. Dadurch ist die als Federschiene ausgebildete Wischblatteinheit 12 fest mit der als Wischgummi ausgebildeten Wischblatteinheit 10 verbunden. Die als Federschiene ausgebildete Wischblatteinheit 12 kann nicht mehr aus der als Wischgummi ausgebildeten Wischblatteinheit 10 herausrutschen. Die Schrumpfung des Aufnahmebereichs 18 der als Wischgummi ausgebildeten Wischblatteinheit 10 bleibt nach einem Auskühlen der Wischblatteinheit 10 bestehen.

Grundsätzlich ist es auch denkbar, dass die erste Wischblatteinheit 10 und die zweite Wischblatteinheit 12 mittels einer Ausdehnverbindung miteinander verbunden sind. Dabei wird die als Federschiene ausgebildete zweite Wischblatteinheit 12 vor einem Einbringen in die Ausnehmung 20 des Aufnahmebereichs 18 mittels eines dem Fachmann als sinnvoll erscheinenden Verfahrens abgekühlt und dadurch geschrumpft. Die geschrumpfte, als Federschiene ausgebildete zweite Wischblatteinheit 12 wird in die Ausnehmung 20 des Aufnahmebereichs 18 eingeführt und in einer gewünschten Position fixiert. Dabei passt die als Federschiene ausgebildete zweite Wischblatteinheit 12 spielfrei in die Ausnehmung 20 des Aufnahmebereichs 18. Durch Abkühlen nimmt die als Federschiene ausgebildete Wischblatteinheit 12 ihre ursprüngliche Form wieder ein und dehnt sich in der Ausnehmung 20 wieder aus. Dadurch wird die als Federschiene ausgebildete Wischblatteinheit 12 in der Ausnehmung 20 des Aufnahmebereichs 18 der als Wischgummi ausgebildeten ersten Wischblatteinheit 10 eingeklemmt. Dadurch ist die als Federschiene ausgebildete Wischblatteinheit 12 fest mit der als Wischgummi ausgebildeten Wischblatteinheit 10 verbunden.

## Patentansprüche

1. Wischvorrichtung mit einer ersten, als Wischgummi ausgebildeten, Wischblatteinheit (10) und zumindest einer zweiten, als Federschiene ausgebildeten, Wischblatteinheit (12), **dadurch gekennzeichnet, dass** die erste Wischblatteinheit (10) einen Aufnahmebereich (18) aufweist, der eine größere Steifigkeit aufweist als ein Wischlippenbereich (16) und die erste Wischblatteinheit (10) und die zweite Wischblatteinheit (10, 12) über eine Schrumpf- und/oder Ausdehnverbindung verbunden sind, die durch eine Wärmebehandlung hergestellt ist.

2. Wischvorrichtung nach Anspruch 1, **dadurch gekennzeichnet, dass** die als Federschiene ausgebildete zweite Wischblatteinheit (12) in Längsrichtung in die als Wischgummi ausgebildete erste Wischblatteinheit (10) eingeschoben ist.

3. Wischblatt mit einer Wischvorrichtung nach einem der vorhergehenden Ansprüche.

4. Verfahren zur Herstellung einer Wischvorrichtung nach einem der vorhergehenden Ansprüche.

## Claims

1. Wiper device with a first wiper blade unit (10) in the form of a wiper blade rubber, and with at least one second wiper blade unit (12) in the form of a spring rail, **characterized in that** the first wiper blade unit (10) has a receiving region (18) which has greater rigidity than a wiper lip region (16), and a first wiper blade unit (10) and the second wiper blade unit (10, 12) are connected via a shrink-fit connection and/or expansion connection produced by heat treatment.

2. Wiper device according to Claim 1, **characterized in that** the second wiper blade unit (12) in the form of a spring rail is pushed in the longitudinal direction into the first wiper blade unit (10) in the form of a wiper blade rubber.

3. Wiper blade with a wiper device according to one of the preceding claims.

4. Method for producing a wiper device according to one of the preceding claims.

## Revendications

1. Dispositif d'essuie-glace comprenant une première unité de balai d'essuie-glace (10) réalisée sous forme de caoutchouc d'essuie-glace et au moins une deuxième unité de balai d'essuie-glace (12) réalisée sous forme de rail élastique, **caractérisé en ce que** la première unité de balai d'essuie-glace (10) présente une région de réception (18) qui présente une plus grande rigidité qu'une région de lèvre de balai d'essuie-glace (16) et la première unité de balai d'essuie-glace (10) et la deuxième unité de balai d'essuie-glace (10, 12) sont raccordées par une liaison par retrait et/ou par dilatation qui est obtenue par un traitement thermique.

2. Dispositif d'essuie-glace selon la revendication 1, **caractérisé en ce que** la deuxième unité de balai d'essuie-glace (12) réalisée sous forme de rail élastique est enfoncée dans la direction longitudinale dans la première unité de balai d'essuie-glace (10) réalisée sous forme de caoutchouc d'essuie-glace.

3. Balai d'essuie-glace comprenant un dispositif d'essuie-glace selon l'une quelconque des revendications précédentes.

4. Procédé pour fabriquer un dispositif d'essuie-glace selon l'une quelconque des revendications précédentes.
